(19) Europäisches Patentamt

European Patent Office

Office européen des brevets

(11) **EP 1 578 000 A2**

(12) **EUROPÄISCHE PATENTANMELDUNG**

| | |
|---|---|
| (43) Veröffentlichungstag:<br>**21.09.2005 Patentblatt 2005/38** | (51) Int Cl.⁷: **H02K 1/16** |

(21) Anmeldenummer: **05000518.0**

(22) Anmeldetag: **12.01.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **17.03.2004 DE 102004013098**

(71) Anmelder: **MINEBEA Co., Ltd.**
**Nagano-ken 3849-2100 (JP)**

(72) Erfinder: **Hans, Helmut, Dr.**
**78112 Sankt Georgen (DE)**

(74) Vertreter: **Liesegang, Eva**
**Forrester & Boehmert,**
**Pettenkoferstrasse 20-22**
**80336 München (DE)**

(54) **Stator für einen Elektromotor**

(57) Stator für einen Elektromotor mit einem Statorkern, der eine Anzahl Statorzähne und zwischen den Statorzähnen liegende Statomuten aufweist, wobei die Statomuten zum Aufnehmen von Statorwicklungen aus-gebildet sind, wobei die Statomuten mit unterschiedli-chen Tiefen ausgebildet sind, um die Anteile der Statorwicklungen einer Phase bzw. mehrerer Phasen des Elektromotors aufzunehmen.

Fig. 2

EP 1 578 000 A2

**Beschreibung**

Die Erfindung betrifft einen Stator für einen Elektromotor mit einem Statorkern, der eine Anzahl Statorzähne und zwischen den Statorzähnen liegende Statornuten aufweist, wobei die Statornuten zum Aufnehmen von Statorwicklungen ausgebildet sind.

Allgemeiner betrifft die Erfindung das Gebiet der elektrischen Motoren, welche Permanentmagnete aufweisen, z.B. bürstenlose, elektronisch kommutierte Gleichstrommotoren und andere Permanentmagnetmotoren, wobei der erfindungsgemäße Motor als Innenläufer oder Außenläufer konfiguriert sein kann. Innenläufermotoren umfassen im allgemeinen eine Rotoranordnung, die auf einer Motorwelle montiert ist und einen oder mehrere Permanentmagnete aufweist, sowie eine Statoranordnung mit einem Statorkern, der z.B. aus paketierten Metallblechen aufgebaut ist, der mit Wicklungen versehen ist.

Bei Innenläufermotoren ist die Rotoranordnung koaxial in die Statoranordnung eingefügt und gegenüber dieser mittels entsprechender Lager drehgelagert.

Bei Außenläufern ist der Stator auf der ebenfalls feststehenden Welle befestigt. Die radial auswärts gerichteten Statorzähne des Stators sind von der Rotoranordnung umschlossen, welche mittels entsprechender Lager relativ gegenüber der Statoranordnung drehgelagert sind.

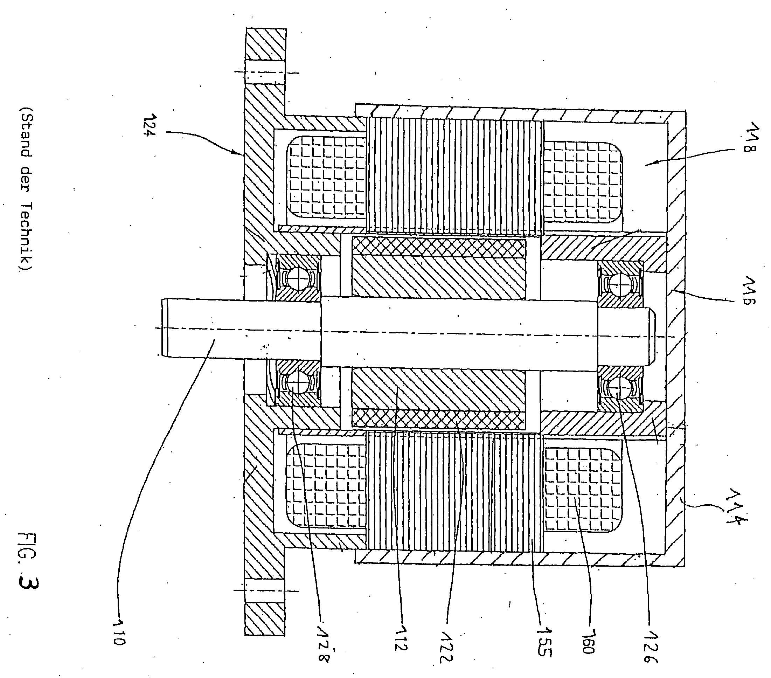

Fig. 3 zeigt grundsätzlich den Aufbau eines Innenläufer-Elektromotors zur Erläuterung des Hintergrundes der Erfindung. Der Motor umfaßt ein Gehäuse 114, in dem eine Statoranordnung 118, eine Rotoranordnung 116 sowie Lager 126, 128 zum drehbaren Lagern der Rotoranordnung aufgenommen sind. Die Statoranordnung 118 umfaßt paketierte Metallbelche 155 und Wicklungen 160 und grenzt einen Innenraum ein, in den die Rotoranordnung 116 eingefügt werden kann. Die Rotoranordnung 116 umfaßt die Motorwelle 110, einen Eisenrückschluß 112 und Permanentmagnete 122. Die Lager 126, 128 für die Lagerung der Rotoranordnung können in einem Flansch 124 des Motorgehäuses 114 integriert sein. Fig. 3 dient, wie erwähnt, der Erläuterung des grundsätzlichen Aufbaus eines Elektromotors, wobei der erfindungsgemäße Statorkörper sowohl für Innenläufer- als auch für Außenläufermotoren konfiguriert sein kann. In einem Außenläufermotor ist der Stator auf die Welle aufgebracht und wird von dem Rotor umschlossen.

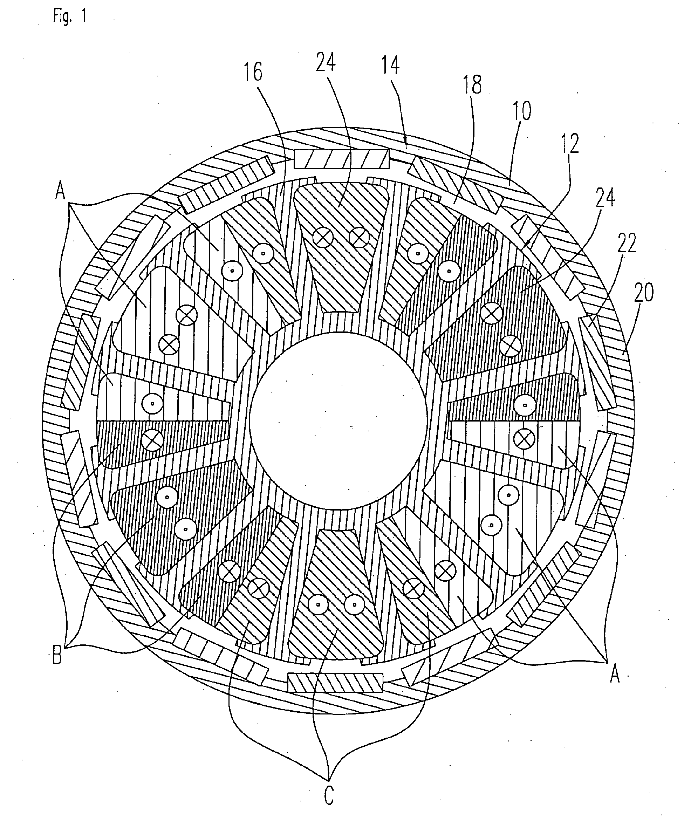

Fig. 1 zeigt eine schematische Schnittdarstellung durch einen Außenläufermotor gemäß dem Stand der Technik.

Der in Fig. 1 schematisch dargestellte Elektromotor umfaßt ein Gehäuse 10, in dem eine Statoranordnung 12 und eine Rotoranordnung 14 aufgenommen sind. Die Statoranordnung 12 ist beispielsweise aus stanzpaketierten Metallblechen aufgebaut, welche Statorzähne 16 und zwischen den Statorzähnen 16 gebildete Statornuten 18 aufweisen. Die Statornuten 18 sind zum Außenumfang der Statoranordnung 12 hin offen, und die Statoranordnung 12 ist insgesamt von der Rotoranordnung 14 umschlossen. Die Rotoranordnung 14 umfaßt einen Rotorkörper 20, in welchen Permanentmagnete 22 eingebettet sind. Die Magnetisierungsrichtung der Permanentmagnete ist in Fig. 1 durch Pfeile dargestellt (Nord → Süd).

Bei dem in Fig. 1 gezeigten permanentmagnetisch erregten Elektromotor sind die Spulen oder Statorwicklungen 24 um Statorzähne 16 gewickelt, welche je nach Stromrichtung "elektromagnetische Pole" ausbilden. Der gezeigte Elektromotor wird auch als genuteter Motor bezeichnet.

In vielen Fällen sind genutete Motoren so ausgeführt, daß die Statorwicklungen um nur einen Statorzahn 16 gewickelt werden. Dies wird als Einzahnwicklung bezeichnet. Fig. 1 zeigt eine typische Form für einen Stator mit 12 Nuten, wobei man in der Darstellung der Fig. 1 erkennt, daß in einer Statornut 18 jeweils die Hälften zweier Statorwicklungen oder Spulen 24 untergebracht sind. In Fig. 1 sind die Statorwicklungen 24 unterschiedlicher Phasen durch unterschiedliche Schraffuren dargestellt, wobei die Spulen 24 einer ersten Phase mit A, einer zweiten Phase mit B und einer dritten Phase mit C bezeichnet sind.

Bei bestimmten Kombinationen von Polpaaranzahl der Rotoranordnung 14 und Nutzahl der Statoranordnung 12 können die innerhalb einer Statornut liegenden Hälften zweier Spulen 24 sogar zur selben Phase gehören. Dies trifft auch auf die in Fig. 1 gezeigte Kombination mit 12 Statornuten und 14 Polen zu. Das Wickelschema für den in Fig. 1 gezeigten Elektromotor kann wie folgt ausgelegt sein:

| Nut Nr. | 1 | 2 | 3 | 4 | 5 | 6 | 7 | 8 | 9 | 10 | 11 | 12 |
|---|---|---|---|---|---|---|---|---|---|---|---|---|
| Statorwicklung | A | a | b | B | C | c | a | A | B | b | c | C |

Der Wickelsinn wird bei dieser Tabelle durch Groß- bzw. Kleinschreibung angegeben und gibt damit an, ob die zur jeweiligen Phase gehörende Wicklung den Strom in die Nut hinein oder aus ihr heraus führt. Man kann auch sagen, daß damit angegeben ist, ob die Wicklung und somit die Stromrichtung im Uhrzeigersinn oder gegen den Uhrzeigersinn um den betreffenden Statorzahn eingerichtet sind.

Die Statorwicklungen 24 der in Fig. 1 gezeigten Statoranordnung werden in sogenannter Flyer-Technik gewickelt. Dabei werden die Drähte der Statorwicklungen durch die Nutöffnungen zwischen zwei Statorzähnen 16 geführt und so unter Spannung gehalten, daß sie sich an den jeweiligen Statorzahn 16 anlegen. Die für die Statorwicklung zur Verfügung stehende Fläche kann somit naturgemäß nicht vollständig ausgeschöpft werden.

Ausgehend von dem oben beschriebenen Stand der Technik ist es Aufgabe der Erfindung, einen Stator für einen Elektromotor anzugeben, bei dem ein besserer Füllfaktor erreicht werden kann und das Einbringen der Statorwicklungen in die Statornuten einfacher ist.

Diese Aufgabe wird durch einen Stator mit den Merkmalen von Patentanspruch 1 gelöst.

Die Erfindung sieht einen Stator für einen Elektromotor mit einem Statorkern vor, der eine Anzahl Statorzähne und zwischen den Statorzähnen liegende Statornuten aufweist, wobei die Statornuten zum Aufnehmen von Statorwicklungen ausgebildet sind. Erfindungsgemäß werden die Statornuten mit unterschiedlichen Tiefen ausgebildet, um in flacheren Statornuten die achsparallelen Anteile der Statorwicklung einer Phase und in tieferen Nuten die achsparallelen Anteile der Statorwicklungen mehrerer Phasen des Elektromotors unterzubringen. Vorzugsweise wird pro Phase des Elektromotors eine Statornut eine größere Tiefe als die übrigen Statornuten aufweisen, um die Anteile der Statorwicklungen benachbarter Phasen aufzunehmen. Diese Wicklungen werden in der tieferen Statornut in radialer Richtung übereinander angeordnet.

Erfindungsgemäß wird somit ein Stator vorgesehen, in dem die Statorwicklungen nicht, wie üblich, ausschließlich in Umfangsrichtung nebeneinander liegen, sondern zusätzlich die radiale Dimension des Stators ausgenutzt wird und in ausgewählten tieferen Statornuten die Wicklungen mehrerer Phasen übereinander angeordnet werden. Durch den erfindungsgemäßen Aufbau des Stators ergibt sich eine Vergrößerung des Kupferraums der Statornuten und somit ein besserer Füllfaktor und eine bessere Ausnutzung des Elektromotors. Beispielsweise ist es bei einem drei-phasigen Elektromotor mit einem neunnutigen Stator möglich, durch Vorsehen einer tieferen Statornut pro Phase die Anzahl der Wicklungsanteile von drei auf vier zu erhöhen. Wenn pro Phase des Elektromotors eine tiefere Statornut vorgesehen wird, gilt allgemein, daß bei einem Elektromotor mit x Phasen und einem Statorkörper mit y Nuten pro Phase des Elektromotors $(\frac{y}{x})$ + 1 Wicklungen vorgesehen werden können.

In einer bevorzugten Ausführungsform der Erfindung werden die Statornuten durch Seitenwände eingegrenzt, die im wesentlichen parallel zueinander angeordnet sind. Dadurch grenzen die Statornuten jeweils einen Raum ein, der vorzugsweise annähernd kubisch ist. Dieser Raum ist zum Innenumfang oder zum Außenumfang des Statorkerns offen, um einen Stator für einen Innenläufer- bzw. einen Außenläufermotor zu bilden, wobei der geschlossene Boden jeder Nut eben oder gekrümmt sein kann.

Durch die erfindungsgemäße Ausbildung der Statornuten ist es möglich, vorgefertigte Spulen als Statorwicklungen zu verwenden, welche jeweils von der Nutöffnung her einfach über die Statorzähne geschoben werden, oder die Wicklungen auf einfachste Weise in die Statornuten einzubringen, weil die Nutöffnungen dieser Statornuten nicht, wie beim Stand der Technik üblich, an ihren offenen Enden eingeschnürt sind.

Statornuten, welche die Statorwicklungen mehrerer Phasen aufnehmen, werden tiefer ausgeführt als Statornuten, welche die Statorwicklungen nur einer Phase aufnehmen. Die Statorwicklungen, die zu verschiedenen Phasen gehören, liegen in radialer Richtung hintereinander und nicht, wie beim Stand der Technik, nebeneinander. Vorzugsweise werden vorgefertigte Spulen auf die Statorzähne aufgeschoben. In der Praxis können die Spulen extern gewickelt und geformt werden und anschließend in die näherungsweise kubischen Nuten eingelegt werden.

Erfindungsgemäß kann ferner vorgesehen sein, daß der Statorkern von den Statornuten getrennte Materialaussparungen aufweist. Diese Materialaussparungen dienen einerseits der Gewichtsreduktion des Statorkerns, sie können jedoch auch als Kanäle zur Durchlüftung des Statorkerns für eine bessere Wärmeabfuhr dienen.

Die Erfindung ist im folgenden anhand einer bevorzugten Ausführungsform mit Bezug auf die Figuren beschrieben. In den Figuren zeigen:

Fig. 1    eine schematische Schnittdarstellung durch einen Elektromotor gemäß dem Stand der Technik;

Fig. 2    eine schematische Schnittdarstellung durch einen Elektromotor gemäß der Erfindung; und

Fig. 3    eine schematische Längsschnittdarstellung durch einen Elektromotor gemäß dem Stand der Technik.

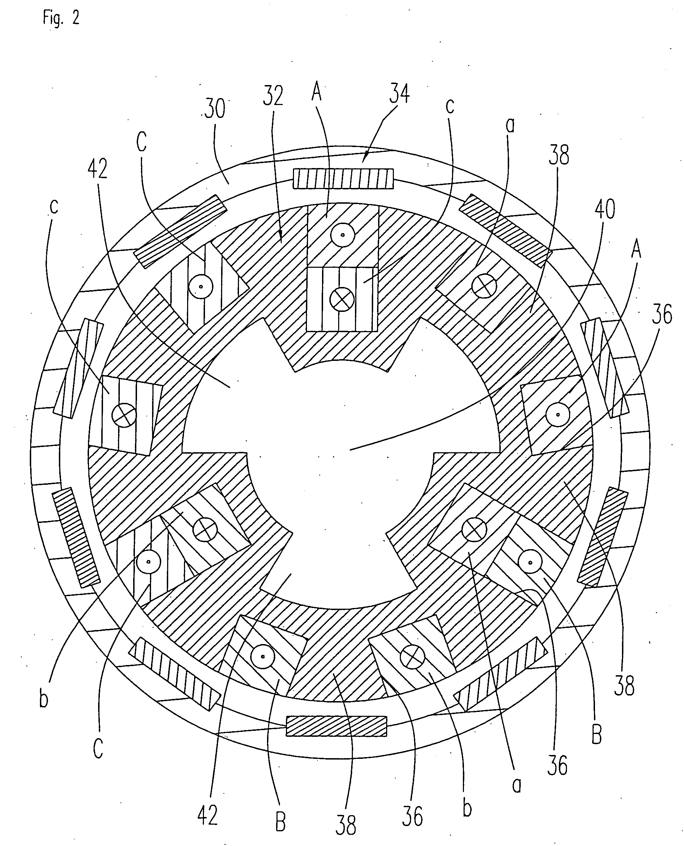

Fig. 2    zeigt eine schematische Schnittdarstellung durch einen Elektromotor mit einem Statorkörper gemäß der Erfindung.

Der in Fig. 2 gezeigte Elektromotor umfaßt ein Gehäuse 30, in dem eine Statoranordnung 32 und eine Rotoranordnung 34 aufgenommen sind. Grundbestandteil der Statoranordnung ist ein Statorkörper mit einem Statorkern oder Statorrückschluß, welcher z.B. aus paketierten Eisenblechen aufgebaut oder aus Eisenpulver gepreßt sein kann. Die Rotoranordnung 34 kann im wesentlichen wie mit Bezug auf Fig. 1 beschrieben aufgebaut sein und wird hier nicht nochmals näher erläutert.

Die Statoranordnung weist Statornuten 36 und Statorzähne 38 auf. Wie in Fig. 2 gezeigt, können die Statornuten in radialer Richtung unterschiedlich tief in den Statorkern eindringen. Die Seitenwände jeweils einer Statornut 36 sind im wesentlichen parallel zueinander angeordnet. Durch von Statornuten 36 mit parallelen Seitenwänden ergeben sich Statorzähne 38, die in Richtung des Außenumfangs der Statoranordnung 32 breiter werden, was sich günstig auf das Flußübertragungsverhalten zwischen der Statoranordnung 32 und der Rotoranordnung 34 auswirkt.

Die Statoranordnung 32 ist auf eine Welle 40 aufgebracht. Wie in Fig. 2 gezeigt, weist der Statorkörper Aussparungen 42 auf, die einerseits der Gewichtsreduktion dienen, andererseits aber auch als Kanäle zur Belüftung oder Hindurchführung eines Kühlfluids für eine bessere Wärmeabfuhr ausgebildet sein können.

Fig. 2 zeigt eine Statoranordnung 32 für einen 9-nutigen Außenläufermotor in Verbindung mit einem 10-poligen Permanentmagneten. Das Wickelschema ergibt sich bei einer Nummerierung der Nuten von 1 bis 9 zu:

| Nut Nr. | 1 | 2 | 3 | 4 | 5 | 6 | 7 | 8 | 9 | |
|---|---|---|---|---|---|---|---|---|---|---|
| *Statorwicklung* | *A* | *a* | *A* | *B* | *b* | *B* | *C* | *c* | *C* | *äußere Lage* |
| | *c* | | | *a* | | | *b* | | | *innere Lage (radial nach innen versetzt)* |

wobei wiederum große bzw. kleine Buchstaben angeben, ob der Strom in positiver oder negativer Richtung durch die Statorwicklungen fließt, während der Buchstabenname die Zugehörigkeit zur Phase angibt. Die Statorwicklungen der unterschiedlichen Phasen sind auch in Fig. 2 durch unterschiedliche Schraffuren gekennzeichnet.

Wie in Fig. 2 dargestellt, sind solche Statornuten 36, in denen die Statorwicklungen zweier Phasen untergebracht sind, tiefer ausgebildet. Dabei liegen die Statorwicklungen in radialer Richtung hintereinander und nicht, wie im Stand der Technik, nebeneinander. Statornuten 36, welche nur die Statorwicklungen einer Phase tragen, sind entsprechend weniger tief ausgeführt. Durch diese Anordnung ergibt sich ein besserer Füllfaktor des erfindungsgemäßen Stators, der mehr Kupferraum als herkömmliche Statoren bietet und dadurch zu einer besseren Ausnutzung des Elektromotors führt.

Durch die Erfindung wird eine Statoranordnung geschaffen, die es erlaubt, gewickelte Statorspulen auf einfache Weise in die Statornuten einzubringen oder sogar vorgefertigte Spulen einfach über die korrespondierenden Statorzähne aufzuschieben. Aufgrund der besonderen Ausbildung der Statornuten und Statorzähne ergibt sich gleichwohl ein gutes Flußübertragungsverhalten zu der korrespondierenden Rotoranordnung. Erfindungsgemäß sind die Statornuten vorzugsweise in Form angenäherter Kuben mit parallelen Seitenwänden ausgebildet. Die Statorzähne müssen jedoch keine parallelen Seitenwände haben. Sind sie nach innen verjüngt ausgebildet, so sollte jedoch die Nuttiefe entsprechend angepaßt werden, um die gleiche Wickelfläche für die inneren wie für die äußeren Lagen der Phasenwicklungen zu erreichen.

Die in der vorstehenden Beschreibung, den Ansprüchen und der Zeichnung offenbarten Merkmale können sowohl einzeln als auch in beliebiger Kombination für die Verwirklichung der Erfindung in ihren verschiedenen Ausgestaltung von Bedeutung sein.

Bezugszeichenliste

10      Gehäuse
12      Statoranordnung
14      Rotoranordnung
16      Statorzähne
18      Statornut
20      Rotorkörper
22      Permanentmagnete
24      Statorwicklungen, Spulen
30      Gehäuse
32      Statoranordnung
34      Rotoranordnung
36      Statornuten
38      Statorzähne
40      Welle
42      Aussparungen
110     Motorwelle

112    Eisenrückschluß
114    Gehäuse
115    Metallbleche
116    Lager
118    Statoranordnung
122    Permanentmagnet
124    Flansch
128    Lager
160    Wicklungen

**Patentansprüche**

1.  Stator für einen Elektromotor mit einem Statorkern (32), der eine Anzahl Statorzähne (38) und zwischen den Statorzähnen liegende Statornuten (36) aufweist, wobei die Statornuten zum Aufnehmen von Statorwicklungen ausgebildet sind, **dadurch gekennzeichnet, daß** die Statornuten (36) mit unterschiedlichen Tiefen ausgebildet sind, um die Anteile der Statorwicklungen einer Phase bzw. mehrerer Phasen des Elektromotors aufzunehmen.

2.  Stator nach Anspruch 1, **dadurch gekennzeichnet, daß** für jede Phase des Elektromotors wenigstens eine Statornut (36) eine größere Tiefe als die anderen Statornuten (36) aufweist, um die achsparallelen Anteile der Statorwicklungen zweier Phasen des Elektromotors aufzunehmen.

3.  Stator nach Anspruch 2, **dadurch gekennzeichnet, daß** die achsparallelen Anteile der Statorwicklungen benachbarter Phasen in jeweils einer tieferen Statornut (36) in radialer Richtung übereinander angeordnet sind.

4.  Stator nach einem der vorangehenden Ansprüche, **dadurch gekennzeichnet, daß** pro Phase des Elektromotors eine Statornut (36) eine größere Tiefe hat, wobei der Elektromotor x Phasen und der Statorkörper y Nuten aufweist, so daß pro Phase des Elektromotors ($\frac{y}{x}$ + 1) Wicklungsanteile vorgesehen sind.

5.  Stator nach einem der vorangehenden Ansprüche, **dadurch gekennzeichnet, daß** jede Statornut (36) durch Seitenwände eingegrenzt ist, die im wesentlichen parallel zueinander angeordnet sind.

6.  Stator nach Anspruch 5, **dadurch gekennzeichnet, daß** die Statornuten (36) jeweils im wesentlichen kubisch sind.

7.  Stator nach einem der vorangehenden Ansprüche, **dadurch gekennzeichnet, daß** der Statorkern (32) von den Statornuten getrennte Materialaussparungen (42) aufweist.

8.  Statorkörper nach Anspruch 7, **dadurch gekennzeichnet, daß** die Materialaussparungen (42) Lüftungskanäle bilden, welche sich durch den Statorkern erstrecken.

9.  Stator mit einem Statorkörper nach einem der vorangehenden Ansprüche und mit Statorwicklungen, welche durch vorab gewickelte und geformte Spulen gebildet sind, die auf die Statorzähne (38) aufgeschoben sind.

10. Stator nach einem der vorangehenden Ansprüche, **dadurch gekennzeichnet, daß** die Statornuten (36) einen Raum eingrenzen, der zum Innenumfang oder zum Außenumfang des Statorkerns (32) offen ist, um einen Stator für einen Innenläufer- bzw. einen Außenläufermotor zu bilden.

Fig. 1

Fig. 2

(Stand der Technik)                    FIG. 3